# EUROPÄISCHE PATENTSCHRIFT

(11) **EP 3 708 010 B1**
(45) Veröffentlichungstag und Bekanntmachung des Hinweises auf die Patenterteilung: **01.12.2021**
(21) Anmeldenummer: 19162557.3
(22) Anmeldetag: 13.03.2019
(51) Int. Cl.: A24F 1/30

(54) **WASSERPFEIFE UND KATALYSATOREINHEIT FÜR EINE WASSERPFEIFE**
WATER PIPE AND CATALYST UNIT FOR SAME
PIPE À EAU ET UNITÉ DE CATALYSEUR POUR PIPE À EAU

(43) Veröffentlichungstag der Anmeldung: 16.09.2020
(73) Patentinhaber: InoxAir GmbH, 45881 Gelsenkirchen (DE)
(72) Erfinder: Bruder, René, 45894 Gelsenkirchen (DE); KAYA, Siar, 46282 Dorsten (DE)
(74) Vertreter: Gesthuysen Patentanwälte

(56) Entgegenhaltungen:
- EP-A1- 3 327 353
- EP-A2- 0 354 661
- WO-A1-03/034847
- US-A1- 2017 251 718

## Beschreibung

Die Erfindung betrifft eine Wasserpfeife mit einem mit einer Waschflüssigkeit befüllbaren Waschgefäß, einer Rauchsäule und einem Pfeifenkopf zur Aufnahme von Tabak oder Tabakersatzstoffen, wobei die Rauchsäule und/oder das Waschgefäß wenigstens einen Mundstückanschluss aufweist und wobei im einsatzbereiten Zustand, also bei einer wenigstens teilweisen Befüllung des Waschgefäßes mit einer Waschflüssigkeit, und bei Anlegen eines Unterdrucks an den Mundstückanschluss, ein Gasstrom vom Pfeifenkopf über die Rauchsäule in das Waschgefäß, in die Waschflüssigkeit, in ein unbefülltes Volumen des Waschgefäßes und durch den Mundstückanschluss bewirkt wird, wobei in unmittelbarer Nähe des Pfeifenkopfes ein Aufnahmeort für einen Brennstoff realisiert ist und wobei der Brennstoff im entzündeten Zustand den Tabak oder den Tabakersatzstoff erhitzt und so genussfähigen Rauch erzeugt. Darüber hinaus betrifft die Erfindung auch eine Katalysatoreinheit für eine derartige Wasserpfeife mit einem Katalysator zur Katalyse der Oxidation von Kohlenmonoxid zu Kohlendioxid durch Sauerstoff. Wasserpfeifen der zuvor beschriebenen Art und deren Gebrauch haben eine jahrhundertealte Tradition, deren Wurzeln im persischen Reich des 15. Jahrhunderts vermutet werden. Das Rauchen von Wasserpfeifen hat sich jedoch weltweit verbreitet und findet auch in der westlichen Welt zunehmend Anklang. Wasserpfeifen werden auch - in unterschiedlicher Schreibweise - als Schischa oder auch als Hookah bezeichnet; das Funktionsprinzip ist jedoch überall das gleiche. Ein Beispiel im Stand der Technik ist die Patentdokumentation US2017251718.

Die zuvor genannten Elemente der Wasserpfeife, Pfeifenkopf, Rauchsäule und Waschgefäß, haben im Regelfall einen vertikalen Aufbau. Zuunterst ist das mit einer Waschflüssigkeit befüllbare Waschgefäß angeordnet, das üblicherweise auf eine ebene Unterlage, beispielsweise einen Tisch, gestellt wird. An der Oberseite des Waschgefäßes befindet sich eine Öffnung, in die die Rauchsäule gesteckt wird, die verhältnismäßig weit in das Waschgefäß eintaucht. Die Rauchsäule ragt so weit in das Waschgefäß hinein, dass das untere Ende der Rauchsäule unter das Niveau der Waschflüssigkeit reicht, die im einsatzbereiten Zustand in das Waschgefäß eingefüllt ist. Bei der Waschflüssigkeit kann es sich einfach um Wasser handeln. Teilweise werden dem Wasser aber auch Zusatzstoffe beigegeben, sodass die Waschflüssigkeit im Ergebnis aus einem - aromatisierten - Flüssigkeitsgemisch besteht. Die Erstreckung der Rauchsäule oberhalb des Waschgefäßes kann - bei eher selten anzutreffenden Ausgestaltungen - überhaupt nicht vorhanden sein, bei häufiger anzutreffenden Konstruktionen beträgt sie aber durchaus einige 10 cm senkrecht nach oben, wodurch sich eine effektive Rauchkühlung realisieren lässt. Die Rauchsäule endet in einer oberen Öffnung. Wenn hier von "oben" und "unten" die Rede ist, dann ist damit das landläufige Verständnis gemeint, nämlich dass der Orientierung des Erdschwerefeldes, dessen Kraftwirkung nach "unten" weist; die entgegengesetzte Richtung ist demzufolge "oben".

An der oberen Öffnung der Rauchsäule, also an der Öffnung, die gerade nicht in die Waschflüssigkeit in dem Waschgefäß ragt, wird ein Pfeifenkopf angeordnet, üblicherweise wird der Pfeifenkopf in die obere Öffnung der Rauchsäule eingesteckt. Der Pfeifenkopf weist eine nach oben geöffnete, schalenförmige Form auf und er dient zur Aufnahme von Tabak oder auch von Tabakersatzstoffen. In Wasserpfeifen verwendete Tabake sind in der Regel viel feuchter als Tabake, die in Zigaretten oder auch Pfeifen verbrannt werden. Tabak, der in Wasserpfeifen verwendet wird, ist üblicherweise mit Feuchthaltemitteln versetzt, wie beispielsweise Melasse und/oder Glycerin. Als Tabakersatzstoffe werden beispielsweise Kräuter oder auch mit einer Flüssigkeit getränkte poröse Steine verwendet.

In unmittelbarer Nähe des Pfeifenkopfes ist ein Aufnahmeort für einen Brennstoff realisiert. Der Brennstoff wird im gebrauchsfähigen Zustand entzündet und gibt entsprechend Verbrennungswärme ab. Üblicherweise handelt es sich bei dem Brennstoff um Kohle.

In einigen Ausführungen der Wasserpfeife ist der Aufnahmeort für den Brennstoff schlicht in Form des Pfeifenkopfes realisiert. Mit anderen Worten werden hier glühende Stückchen Kohle direkt auf dem Tabak platziert. Der Aufnahmeort hat demnach keine eigenen gegenständlich-konstruktiven Merkmale.

Bei anderen Ausgestaltungen und Verwendungen, insbesondere bei Ausgestaltungen, die auch in der westlichen Welt Verbreitung gefunden haben, wird die obere Öffnung des Pfeifenkopfes mit einer Ablage für den Brennstoff abgedeckt. Die Ablage kann beispielsweise in einer Lage oder mehreren Lagen Aluminiumfolie bestehen, die über den oberen Rand des Pfeifenkopfes gespannt wird. Der Ablageort für den Brennstoff - für die Kohle - wird dann also gebildet durch die obere Seite der gespannten Aluminiumfolie, die vor Gebrauch perforiert wird. In einer anderen Ausgestaltung wird auf die obere Öffnung des Pfeifenkopfes einfach ein Metallgitter gelegt, dessen Oberfläche dann den Aufnahmeort für den Brennstoff bildet. In den letzten beiden Fällen gerät der Brennstoff im Betrieb der Wasserpfeife nicht in unmittelbarem Kontakt mit dem Tabak oder dem Tabakersatzstoff. Gemeinsam ist den beschriebenen Ausführungsformen jedoch, dass durch die unmittelbare Nähe des Aufnahmeortes für den Brennstoff zu dem Pfeifenkopf und damit dem darin befindlichen Tabak (oder Tabakersatzstoff) der Tabak so weit erhitzt wird, dass ein entsprechender Rauch entsteht. Dieser Rauch ist nicht Ergebnis eines Verbrennungsvorganges, da der Tabak bzw. der Tabakersatzstoff nicht unbedingt verbrannt wird. Vielmehr wird der - üblicherweise eine hohe Feuchtigkeit aufweisende - Tabak nur so weit erhitzt, dass sich ein entsprechender Dampf bildet, der hier auch als "Rauch" verstanden werden soll.

Üblicherweise wird an der Rauchsäule ein Mundstückanschluss vorgesehen, der funktional aber auch im oberen Bereich des Waschgefäßes realisiert werden kann. In beiden Fällen wird auf den Mundstückanschluss üblicherweise ein Schlauch mit einem Mundstück angeschlossen. Durch Erzeugen eines Unterdruckes an dem Mundstück wird der eingangs beschriebene Gasstrom in Bewegung gesetzt. Der von dem erhitzten Tabak bzw. Tabakersatzstoff freigesetzte Rauch wird dabei von dem Pfeifenkopf über die Rauchsäule in das Waschgefäß transportiert. Der Rauch durchläuft dann die Waschflüssigkeit und steigt in ein unbefülltes, also nicht mit Waschflüssigkeit gefülltes Volumen des Waschgefäßes auf und gerät von dort aus durch den Mundstückanschluss und einen angeschlossenen Schlauch zu dem Konsumenten.

Ein ernst zu nehmendes Problem geht von den Brennstoffabgasen aus, die der Brennstoff im entzündeten Zustand erzeugt. Insbesondere ist das in den Abgasen enthaltene Kohlenstoffmonoxid (häufig einfach als Kohlenmonoxid bezeichnet, mit der Summenformel CO) problematisch, da es extrem toxisch ist, gleichwohl aber für Menschen nicht wahrnehmbar ist, da es farb-, geruch- und geschmacklos ist. Es entsteht typischerweise bei der unvollständigen Verbrennung von kohlenstoffhaltigen Brennstoffen - wie beispielsweise den im Regelfall zum Einsatz kommenden Kohlestückchen. Insbesondere wenn Wasserpfeifen in geschlossenen oder unzureichend belüfteten Räumen betrieben werden, besteht die akute Gefahr einer Kohlenmonoxid-Vergiftung. Der über die Rauchsäule eingeatmete Rauch hat unbestritten zwar auch eine gesundheitsschädliche Wirkung, jedoch ist der Kohlenmonoxid-Anteil sehr gering, teilweise unterhalb der mit Handmessgeräten erzielbaren Nachweisschwelle. Problematisch sind in dieser Beziehung also im Wesentlichen die bei der Verbrennung der kohlenstoffhaltigen Brennstoffe entstehenden Abgase, die nach oben aus der Wasserpfeife entweichen.

Die Aufgabe der vorliegenden Erfindung besteht daher darin, eine Wasserpfeife bzw. eine Zusatzeinrichtung für eine Wasserpfeife anzugeben, bei der die Gefahr einer Kohlenstoffmonoxid-Vergiftung durch Abgase beim Verbrennen des (kohlenstoffhaltigen) Brennstoffs erheblich vermindert wird.

Die zuvor hergeleitete Aufgabe ist bei der eingangs dargestellten Wasserpfeife zunächst und im Wesentlichen dadurch gelöst, dass oberhalb des Aufnahmeortes für den Brennstoff eine Katalysatoreinheit mit einem Katalysator zur Katalyse der Oxidation von Kohlenmonoxid zu Kohlendioxid durch Sauerstoff so angeordnet ist, dass die im entzündeten Zustand des Brennstoffes entstehenden Brennstoffabgase zumindest teilweise durch die Katalysatoreinheit geleitet werden und zumindest ein Teil des in den Abgasen vorhandenen Kohlenmonoxids zu Kohlendioxid oxidiert wird. Durch Anordnung der Katalysatoreinheit und damit auch des Katalysators selbst oberhalb des Aufnahmeortes für den Brennstoff wird bewirkt, dass die das giftige Kohlenmonoxid enthaltenden Brennstoffabgase durch die Katalysatoreinheit geführt werden, dort mit dem Katalysator zumindest teilweise in Kontakt geraten und so der Anteil von Kohlenstoffmonoxid in den Brennstoffabgasen effektiv reduziert wird. Eine derart ausgestaltete Wasserpfeife hat den Vorteil, dass mit sehr einfachen Mitteln ein maßgebliches Problem bei der Verwendung von Wasserpfeifen beseitigt wird. Bei geschickter Auslegung der Katalysatoreinheit kann der Kohlenstoffmonoxid-Gehalt in den Brennstoffabgasen zum überwiegenden Teil durch den zum Einsatz kommenden katalytischen Prozess beseitigt werden. Die Verwendung von Wasserpfeifen wird damit in geschlossenen Räumen ganz erheblich sicherer, insbesondere sinken dadurch auch die Anforderungen an entsprechende Be- und Entlüftungsanlagen.

Bei einer bevorzugten Ausgestaltung der Erfindung ist vorgesehen, dass die Katalysatoreinheit so angeordnet oder ausgestaltet ist, dass im Betriebszustand bei entzündetem Brennstoff der zur Katalyse der Oxidation von Kohlenmonoxid zu Kohlendioxid erforderliche Sauerstoff durch Umgebungsluft bereitgestellt ist. Dies hat den Vorteil, dass zur Katalyse der Oxidation nicht separat Sauerstoff bereitgestellt werden muss. Dadurch verringert sich zwar der Sauerstoffgehalt in der Umgebungsluft, da dieser bei der Oxidation von Kohlenmonoxid zu Kohlendioxid gebunden wird, jedoch ist Kohlendioxid an sich nicht toxisch, jedenfalls nicht in den hier entstehenden Konzentrationen.

Bei einer weiteren vorteilhaften Ausgestaltung ist vorgesehen, dass die Katalysatoreinheit einen durchströmbaren Katalysator aufweist, wobei im bestimmungsgemäßen Betriebszustand bei entzündetem Brennstoff und von den Brennstoffabgasen durchströmten Katalysator der Katalysator zwischen der Einströmseite und der Ausströmseite einen geringen Strömungswiderstand hat. Der Strömungswiderstand sollte so gewählt werden, dass sich ein Druckabfall zwischen der Einströmseite und der Ausströmseite des Katalysators von höchstens 15 Pa, bevorzugt von höchstens 1 Pa, bevorzugt von höchstens 0,5 Pa, weiter bevorzugt von höchsten 0,05 Pa einstellt. Je geringer der Strömungswiderstand ist, desto einfacher können die Brennstoffabgase durch den Katalysator hindurchtreten, es werden also Stauungseffekte an der Einströmseite des Katalysators vermieden. Der Strömungswiderstand kann nicht beliebig klein gemacht werden, da der Katalysator natürlich auch eine hinreichend große Oberfläche im Strom der Brennstoffabgase bereitstellen muss, damit der gewünschte Anteil an Kohlenmonoxid aus den Brennstoffabgasen durch Katalyse in Kohlendioxid umgewandelt wird.

Bei einer weiteren bevorzugten Ausgestaltung ist vorgesehen, dass die Katalysatoreinheit und mit ihr der Katalysator so ausgelegt sind, dass die vom entzündeten Brennstoff freigesetzte Energie ausreicht, um die Brennstoffabgase durch die Katalysatoreinheit und den Katalysator zu treiben. Diese Ausgestaltung hat den Vorteil, dass keine Zusatzvorrichtung vorgesehen werden muss, um die Brennstoffabgase durch den Katalysator zu treiben. Der Gasstrom wird also durch die vom entzündeten Brennstoff freigesetzte Energie selbst angetrieben. Der maßgebliche Effekt besteht hier in der Verursachung eines Konvektionsstroms, sodass also heiße und damit weniger dichte Brennstoffabgase in der kühleren und damit dichteren Umgebungsluft nach oben aufsteigen und so automatisch ihren Weg durch den Katalysator finden, der ja oberhalb des Aufnahmeortes für den Brennstoff angeordnet ist.

Es hat sich als vorteilhaft herausgestellt, wenn der Katalysator zumindest teilweise aus einer beschichteten, offenporigen Schwammkeramik gebildet ist, wobei die Beschichtung zumindest teilweise aus Metalloxiden gebildet ist, insbesondere aus Übergangsmetallen und/oder Edelmetallen. Derartige Katalysatoren haben sich als sehr widerstandsfähig herausgestellt. Zudem weisen sie den Vorteil auf, dass sie vergleichsweise leicht gereinigt werden können, beispielsweise mit einem moderaten Druckluftstrom.

Bevorzugt ist die Katalysatoreinheit so zu dem Aufnahmeort für den Brennstoff angeordnet, dass im Betriebszustand bei entzündetem Brennstoff die durch den entzündeten Brennstoff zum Katalysator der Katalysatoreinheit transportierte Energie ausreicht, um die für die zu bewirkende Katalyse von Kohlenmonoxid zu Kohlendioxid erforderliche Katalysatortemperatur zu erzielen. Auch diese Ausgestaltung der erfindungsgemäßen Wasserpfeife bzw. der dort verwendeten Katalysatoreinheit ist insbesondere deshalb vorteilhaft, weil auf eine separate Energiezufuhr zur Beheizung des Katalysators vollständig verzichtet werden kann, der Katalysator erreicht seine Anspringtemperatur also alleine durch Energiezufuhr von dem entzündeten Brennstoff (Wärmestrahlung) und durch die dadurch bewirkten Brennstoffabgase (Konvektion). Der Wärmeeintrag geschieht hier einerseits durch den heißen konvektiven Strom der Brennstoffabgase durch den Katalysator, andererseits aber auch durch direkte Wärmestrahlung des entzündeten Brennstoffs.

Vorzugsweise wird ein derartiger Katalysator ausgewählt, der eine erforderliche Katalysatortemperatur (Anspringtemperatur) von höchstens 800 °C, bevorzugt von höchstens 400 °C, bevorzugt von höchsten 300 °C, besonders bevorzugt von höchstens 200 °C und weiter bevorzugt von höchsten 100 °C aufweist. Katalysatoren mit einer niedrigen Anspringtemperatur haben den Vorteil, dass sie schneller ihre Betriebstemperatur erreichen und sich so der gewünschte Effekt der Katalyse von Kohlenmonoxid in Kohlendioxid schneller einstellt. Verschiedene Versuche haben ergeben, dass verschiedene Katalysatoren auch unterhalb ihrer angegebenen Anspringtemperatur den katalytischen Effekt aufweisen, also die Aktivierungsenergie der gewünschten Oxidation herabsetzen.

Eine bevorzugte Ausgestaltung der Katalysatoreinheit zeichnet sich dadurch aus, dass die Katalysatoreinheit einen Tubus und den Katalysator aufweist, wobei sich der Tubus zwischen einer ersten Tubusöffnung und einer zweiten Tubusöffnung erstreckt, wobei im Montagezustand der Katalysatoreinheit die erste Tubusöffnung unterhalb der zweiten Tubusöffnung angeordnet ist, wobei der Katalysator in dem Querschnitt des Tubus mit einer Haltevorrichtung zwischen der ersten Tubusöffnung und der zweiten Tubusöffnung gehalten wird, nämlich oberhalb des Aufnahmeortes für den Brennstoff und damit auch oberhalb des Brennstoffes. Der Katalysator soll insbesondere mindestens 99 %, insbesondere mindestens 95 %, bevorzugt mindestens 85 %, ganz bevorzugt mindestens 75 % des Querschnitts des Tubus einnehmen. Je größer die Querschnittsfläche ist, die der Katalysator im Tubus abdeckt, desto geringer sind mögliche Staueffekte in der Strömung. Auf der anderen Seite wird der Katalysator nur in dem Bereich wirksam, durch den Brennstoffabgase hindurchströmen. Bei der Auslegung der Größe des Katalysators ist also eine Abwägung zu treffen zwischen den unterschiedlichen Kosten von unterschiedlich großen Katalysatoren und den einzustellenden strömungstechnischen Randbedingungen.

Vorzugsweise ist die Haltevorrichtung der Katalysatoreinheit in dem Tubus als zumindest teilweise umlaufender Kragen ausgebildet. Der Kragen muss nicht vollständig umlaufen, er kann auch verschiedene Unterbrechungen aufweisen. Wichtig ist jedenfalls, dass sich der Katalysator im Montagezustand aufgrund seiner Gewichtskraft auf dem Kragen im Inneren des Tubus abstützen kann.

Bei einem bevorzugten Ausführungsbeispiel ist vorgesehen, dass die Haltevorrichtung für den Katalysator entlang der Erstreckung des Tubus von der ersten Öffnung zur zweiten Öffnung verstellbar angeordnet ist. Dadurch ist es möglich, die Katalysatoreinheit an die Geometrie verschiedener handelsüblicher Wasserpfeifen - die also nicht mit einer Katalysatoreinheit ausgestattet sind - anzupassen. Insbesondere ist es dann möglich, eine Anpassung an verschieden hohe Pfeifenköpfe einer Wasserpfeife anzupassen.

Bevorzugt ist vorgesehen, dass zwischen der Wandung des Tubus und dem Katalysator Strömungsöffnungen ausgebildet sind, insbesondere Strömungsöffnungen mit einem freien Querschnitt. Diese Strömungsöffnungen wirken funktional wie ein Bypass zur Umgehung des Strömungspfades durch den Katalysator. Da die Strömungsöffnungen zwischen der Wandung des Tubus und dem Katalysator vorgesehen sind, also außerhalb des zentralen Strömungsbereiches der Brennstoffabgase, werden diese Strömungsöffnungen verstärkt nur dann genutzt, wenn der eigentliche Strömungspfad der Brennstoffabgase durch den Katalysator blockiert ist, beispielsweise durch entsprechende Verschmutzungen.

Bei einer besonders bevorzugten Ausgestaltung der Erfindung ist vorgesehen, dass unterhalb des Pfeifenkopfes an der Rauchsäule ein Fangteller angeordnet ist. Derartige Konstruktionen sind bei handelsüblichen Wasserpfeifen bereits bekannt. Der Fangteller dient im Wesentlichen dazu, von seinem Ablageort herunterfallenden Brennstoff oder herunterfallende Asche aufzufangen. Zu diesem Zweck hat der Fangteller einen größeren Durchmesser als der größte Pfeifenkopfdurchmesser, andernfalls könnte er seine Funktion des Auffangens herunterfallender Brennstoffteile nicht erfüllen. Es ist nun vorgesehen, dass die erste Tubusöffnung des Tubus der Katalysatoreinheit so ausgestaltet ist, dass der Tubus mit der ersten Tubusöffnung über den Pfeifenkopf stülpbar ist, und im Montagezustand mit dem Rand der ersten Tubusöffnung auf dem Fangteller zum Liegen kommt. Die Katalysatoreinheit stützt sich hier also auf dem Fangteller ab und erstreckt sich dann quasi rohrförmig senkrecht nach oben an dem Pfeifenkopf vorbei und über den Aufnahmeort für den Brennstoff hinaus, sodass der Tubus den Katalysator auch oberhalb des Aufnahmeortes für den Brennstoff - und damit auch oberhalb des Brennstoffes selbst - halten kann.

Eine solche Ausgestaltung der Katalysatoreinheit ist ganz besonders gut geeignet als separates Zubehörteil für eine Wasserpfeife, da es auch für Wasserpfeifen verwendbar ist, die noch mit keiner Katalysatoreinheit ausgestattet sind.

Um eine ausreichende Versorgung des Brennstoffes mit Umgebungsluft zu gewährleisten, ist ferner zusätzlich vorgesehen, dass der Tubus in seiner Wandung wenigstens eine Belüftungsöffnung aufweist, wobei durch die Belüftungsöffnung Umgebungsluft an den Aufnahmeort für den Brennstoff im Innenraum der Katalysatoreinheit gelangen kann, insbesondere wobei die Belüftungsöffnung zwischen der ersten Tubusöffnung und der Haltevorrichtung für den Katalysator vorgesehen ist.

Die erfindungsgemäße Aufgabe ist ferner durch eine Katalysatoreinheit für eine Wasserpfeife gelöst. Die Katalysatoreinheit wird hier als separates Bauteil gesehen, das zur Verwendung mit einer Wasserpfeife hergerichtet ist. Es handelt sich also um eine separate Katalysatoreinheit mit den Eigenschaften der Katalysatoreinheit, die zuvor im Zusammenhang mit der beschriebenen Wasserpfeife dargestellt worden ist. Es geht also um eine Katalysatoreinheit für eine Wasserpfeife mit einem Katalysator zur Katalyse der Oxidation von Kohlenmonoxid zu Kohlendioxid durch Sauerstoff, wobei die Wasserpfeife ein mit einer Waschflüssigkeit befüllbares Waschgefäß, einer Rauchsäule und einen Pfeifenkopf zur Aufnahme von Tabak oder Tabakersatzstoffen aufweist, wobei die Rauchsäule und/oder das Waschgefäß wenigstens einen Mundstückanschluss aufweist und wobei im einsatzbereiten Zustand, also bei einer wenigstens teilweisen Befüllung des Waschgefäßes mit einer Waschflüssigkeit, und bei Anlegen eines Unterdrucks an den Mundstückanschluss, ein Gasstrom vom Pfeifenkopf über die Rauchsäule in das Waschgefäß, in die Waschflüssigkeit, in ein unbefülltes Volumen des Waschgefäßes und durch den Mundstückanschluss bewirkt wird, wobei in unmittelbarer Nähe des Pfeifenkopfes ein Aufnahmeort für einen Brennstoff realisiert ist und wobei der Brennstoff im entzündeten Zustand den Tabak oder den Tabakersatzstoff erhitzt und so genussfähigen Rauch erzeugt, wobei die Katalysatoreinheit so ausgestaltet ist, dass sie oberhalb des Aufnahmeortes für den Brennstoff so an der Wasserpfeife anordenbar ist, dass die im entzündeten Zustand des Brennstoffes entstehenden Brennstoffabgase zumindest teilweise durch die Katalysatoreinheit geleitet werden und zumindest ein Teil des in den Abgasen vorhandenen Kohlenmonoxids zu Kohlendioxid oxidiert wird. Alle Merkmale, die vorstehend in Zusammenhang mit der Katalysatoreinheit der Wasserpfeife erörtert worden sind, sind selbstverständlich gleichermaßen anwendbar auf die vorgenannte Katalysatoreinheit.

Im Einzelnen gibt es nun eine Vielzahl von Möglichkeiten, die erfindungsgemäße Wasserpfeife und die erfindungsgemäße Katalysatoreinheit auszugestalten und weiterzubilden. Dazu wird verwiesen sowohl auf die den unabhängigen Patentansprüchen nachgeordneten Patentansprüche als auch auf die nachfolgende Beschreibung von bevorzugten Ausführungsbeispielen in Verbindung mit der Zeichnung. In der Zeichnung zeigen
- Fig. 1: schematisch eine Wasserpfeife mit einer lang ausgeführten Rauchsäule und mit Katalysatoreinheit,
- Fig. 2: eine Wasserpfeife mit einer außerhalb des Waschgefäßes sehr kurzen Rauchsäule und mit einer Katalysatoreinheit,
- Fig. 3: schematisch eine Katalysatoreinheit mit einem nur teilweise angedeuteten Pfeifenkopf,
- Fig. 4: schematisch eine alternative Ausführung einer Katalysatoreinheit mit einem nur angedeuteten Pfeifenkopf und
- Fig. 5: schematisch eine weitere Ausgestaltung einer Katalysatoreinheit mit einem nur angedeuteten Pfeifenkopf, wobei der Katalysator in einer Haltevorrichtung verstellbar gehalten ist.

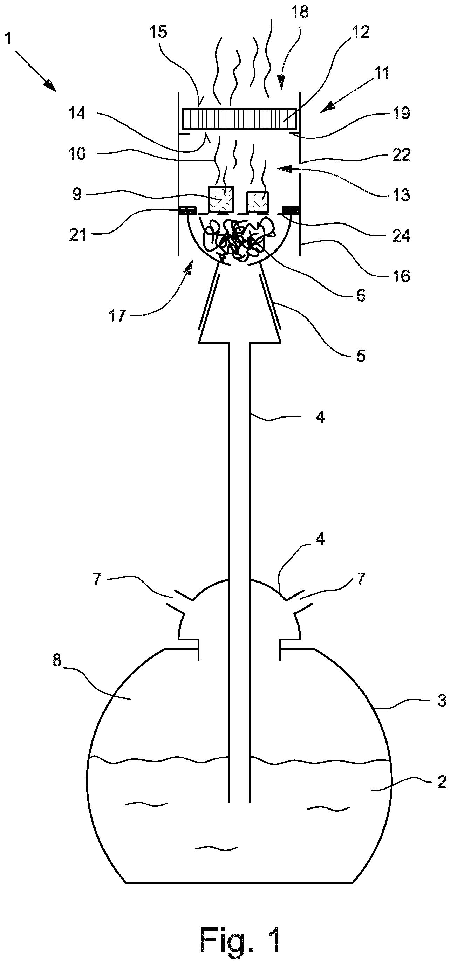

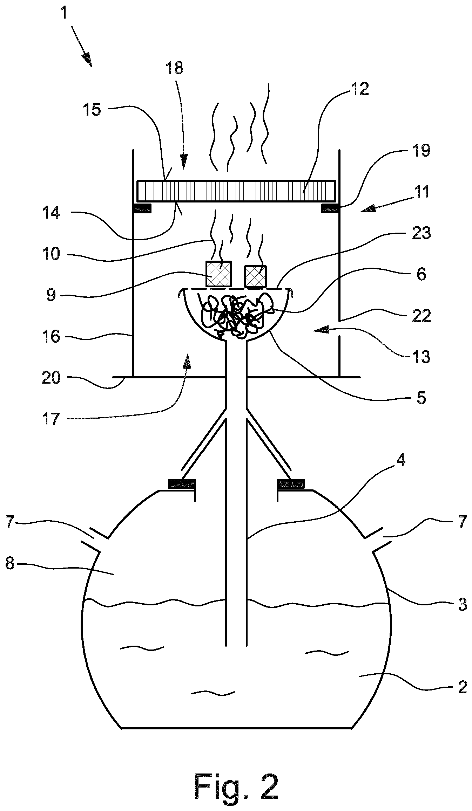

In den Fig. 1 und 2 ist jeweils vollständig eine Wasserpfeife 1 dargestellt. Die Wasserpfeife 1 weist ein mit einer Waschflüssigkeit 2 befülltes Waschgefäß 3, eine Rauchsäule 4 und ein Pfeifenkopf 5 zur Aufnahme von Tabak 6 oder von Tabakersatzstoffen auf. Die Rauchsäule 4 weist im Falle des Ausführungsbeispieles von Fig. 1 zwei Mundstückanschlüsse 7 auf. Im Falle des Ausführungsbeispieles von Fig. 2 weist das Waschgefäß 3 den Mundstückanschluss 7 auf.

In den Fig. 1 und 2 befindet sich die Wasserpfeife 1 im einsatzbereiten Zustand, das Waschgefäß 3 ist mit der Waschflüssigkeit 2 teilweise befüllt. Aus den Fig. 1 und 2 ist ersichtlich, dass bei Anlegen eines Unterdrucks an den Mundstückanschlüssen 7 ein Gasstrom vom Pfeifenkopf 5 über die Rauchsäule 4 in das Waschgefäß 3, von dort in die Waschflüssigkeit 2, in ein unbefülltes Volumen 8 des Waschgefäßes 3 und schließlich durch den Mundstückanschluss 7 bewirkt wird. In unmittelbarer Nähe des Pfeifenkopfes 5 ist ein Aufnahmeort für einen Brennstoff 9 realisiert, wobei es sich bei dem Brennstoff 9 in den vorliegenden Ausführungsbeispielen um kleine Kohlestücke handelt. Der Brennstoff 9 ist entzündet und erhitzt den Tabak 6, sodass schließlich ein genussfähiger Rauch bzw. Dampf erzeugt wird.

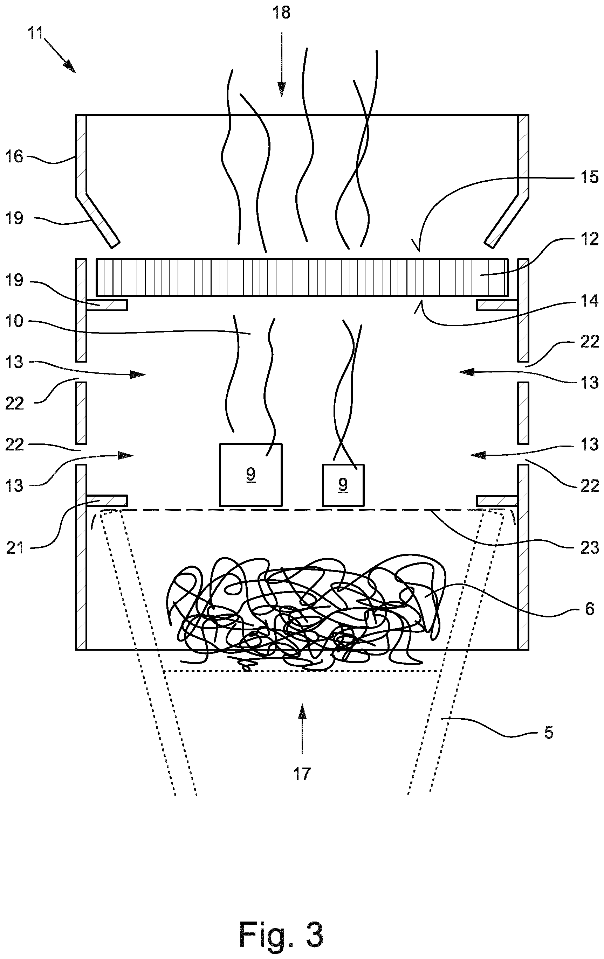

In den Fig. 2 und 3 ist der Aufnahmeort für den Brennstoff 9 durch zwei Lagen perforierte Aluminiumfolie 23 definiert, nämlich auf der Oberseite der Aluminiumfolie 23. Bei den anderen Ausführungsbeispielen gemäß den Fig. 1, 4 und 5 wird der Aufnahmeort durch ein perforiertes Blech 24 realisiert, auf dem der Brennstoff 9 ruht.

Kohlenstoffmonoxid-Gas entsteht bei der vor allem unvollständigen Verbrennung des kohlenstoffhaltigen Brennstoffs 9. Kohlenmonoxid ist für den Menschen toxisch und führt ab einer gewissen Atemluftkonzentration zur Erstickung. Das Kohlenmonoxid ist vor allem Bestandteil des im entzündeten Zustand des Brennstoffes 9 entstehenden Brennstoffabgases 10. Die Emission des Kohlenmonoxids stellt ein massives Problem dar, besonders wenn Wasserpfeifen 1 in geschlossenen Räumen betrieben werden. Hier werden nicht selten unzulässige Kohlenmonoxid-Konzentrationen erreicht, weil für eine ausreichende Be- und Entlüftung der Räumlichkeiten nur unzureichend gesorgt ist.

Zur Lösung dieses Problems ist oberhalb des Aufnahmeortes für den Brennstoff 9 - und damit oberhalb des Brennstoffes 9 - eine Katalysatoreinheit 11 mit einem Katalysator 12 angeordnet. Der Katalysator 12 dient der Katalyse der Oxidation von Kohlenmonoxid zu Kohlendioxid durch Sauerstoff. Die Katalysatoreinheit 11 ist so angeordnet, dass die im entzündeten Zustand des Brennstoffes 9 entstehenden Brennstoffabgase 10 zumindest teilweise durch die Katalysatoreinheit 11 geleitet werden und zumindest ein Teil des in den Brennstoffabgasen 10 vorhandenen Kohlenmonoxids zu Kohlendioxid oxidiert wird. Im Folgenden geht es also im Wesentlichen um die Ausgestaltung der Katalysatoreinheit 11, die in den Fig. 3 bis 5 zwar schematisch, aber doch detaillierter dargestellt ist.

Allen Ausführungsbeispielen ist gemeinsam, dass die Katalysatoreinheit 11 so angeordnet oder ausgestaltet ist, dass im Betriebszustand, also bei entzündetem Brennstoff 9 der zur Katalyse der Oxidation von Kohlenmonoxid zu Kohlendioxid erforderliche Sauerstoff durch die Umgebungsluft 13 bereitgestellt ist. Dadurch kann auf eine separate Sauerstoffversorgung des Katalysators 12 verzichtet werden, die Katalysatoreinheit 11 ist also unabhängig von einer separaten Sauerstoffversorgung einsatzfähig. Dazu werden zum Teil konstruktive Maßnahmen ergriffen, die weiter unten beschrieben werden. In den Figuren sind die Strömungswege der Umgebungsluft 13 teilweise angedeutet.

In allen Ausführungsbeispielen weist die Katalysatoreinheit 11 einen durchströmbaren Katalysator 12 auf, wobei im bestimmungsgemäßen Betriebszustand bei entzündetem Brennstoff 9 und von den Brennstoffabgasen 10 durchströmten Katalysator 12 der Katalysator 12 zwischen der Einströmseite 14 und der Ausströmseite 15 einen sehr geringen Strömungswiderstand hat. Der Strömungswiderstand ist hier so eingestellt, dass sich im Betriebszustand und im Strömungsgleichgewicht höchstens eine Druckdifferenz zwischen der Einströmseite 14 und der Ausströmseite 15 des Katalysators 12 von maximal 0,5 Pa einstellt.

Allen dargestellten Ausführungsbeispielen ist ebenfalls gemeinsam, dass die Katalysatoreinheit 11 und mit ihr der Katalysator 12 so ausgelegt sind, dass (bei relativ normalen Umgebungsbedingungen) die vom entzündeten Brennstoff 9 freigesetzte Energie ausreicht, um die Brennstoffabgase 10 durch die Katalysatoreinheit 11 und den Katalysator 12 zu treiben. Auch diese Maßnahme trägt erkennbar dazu bei, dass die Katalysatoreinheit 11 autark betreibbar ist.

In den dargestellten Ausführungsbeispielen ist der Katalysator 12 aus einer beschichteten, offenporigen Schwammkeramik gebildet. Zur Erzielung der katalytischen Wirkung ist die Schwammkeramik mit Metalloxiden beschichtet, hier aus Übergangsmetallen und Edelmetallen. In den dargestellten Ausführungsbeispielen ist die Katalysatoreinheit 11 so zu dem Aufnahmeort für den Brennstoff 9 und damit auch zu dem Brennstoff 9 selbst angeordnet, dass im Betriebszustand bei entzündetem Brennstoff 9 die durch den entzündeten Brennstoff 9 zum Katalysator 12 der Katalysatoreinheit 11 transportierte Energie ausreicht, um die für die zu bewirkende Katalyse von Kohlenmonoxid zu Kohlendioxid erforderliche Katalysatortemperatur zu erzielen. In den dargestellten Ausführungsbeispielen hat der Katalysator 12 eine erforderliche Katalysatortemperatur von 350 °C. Es hat sich in Experimenten jedoch herausgestellt, dass der katalytische Effekt auch schon bei erheblich geringeren Temperaturen oberhalb von 150°C die Oxidation von Kohlenmonoxid mit Luftsauerstoff zu Kohlendioxid befördert.

Im Ergebnis kann die in den Figuren dargestellte Katalysatoreinheit 11 vollkommen autark betrieben werden. Es ist weder die Zufuhr von separatem Sauerstoff erforderlich (es reicht der in der Umgebungsluft 13 vorhandene Luftsauerstoff), die Katalysatoreinheit 11 muss nicht zwangsbelüftet werden (es reicht der durch die Verbrennung des Brennstoffes 9 bewirkte konvektive Luftstrom bzw. Strom der Brennstoffabgase 10) und der eingesetzte Katalysator 12 bedarf keiner Energiezufuhr außer der, die er ohnehin durch seine Anordnung über dem entzündeten Brennstoff 9 erhält. Die Katalysatoreinheit 11 kann also beispielsweise auch einfach auf eine schon vorhandene konventionelle Wasserpfeife gesetzt werden, also eine Wasserpfeife, die noch über keine Ausstattung mit einer Katalysatoreinheit 11 verfügt, sodass der Problematik der Emission von Kohlenmonoxid sehr schnell und ohne Umbaumaßnahmen abgeholfen werden kann.

In den dargestellten Ausführungsbeispielen weist die Katalysatoreinheit 11 einen Tubus 16 und den schon beschriebenen Katalysator 12 auf. Der Tubus 16 erstreckt sich zwischen einer ersten Tubusöffnung 17 und einer zweiten Tubusöffnung 18. Im Montagezustand der Katalysatoreinheit 11 ist die erste Tubusöffnung 17 unterhalb der zweiten Tubusöffnung 18 angeordnet. Der Katalysator 12 wird in den Querschnitt des Tubus 16 mit einer Haltevorrichtung 19 zwischen der ersten Tubusöffnung 17 und der zweiten Tubusöffnung 18 gehalten. Dies ist in den Fig. 3 bis 5 dargestellt. In den dargestellten Ausführungsbeispielen nimmt der Katalysator 12 über 90 % des Querschnitts des Tubus 16 ein.

In Fig. 3 ist die Haltevorrichtung 19 der Katalysatoreinheit 11 in dem Tubus 16 als zumindest teilweise umlaufender Kragen ausgebildet, wobei der Kragen Unterbrechungen aufweist. Auf dem Kragen bzw. den Kragenelementen stützt sich der Katalysator 12 im Montagezustand aufgrund seiner Gewichtskraft ab. Oberhalb des Katalysators 12 sind aus dem Tubus 16 zwei Haltelaschen ausgeklinkt und in den Innenraum des Tubus 16 gebogen, die so ein Herausfallen des Katalysators 12 aus dem Tubus 16 verhindern.

Der Kragen ist in Fig. 3 an dem Tubus 16 angelötet. In alternativen und hier nicht dargestellten Ausführungsbeispielen ist der Kragen im Tubus 16 festgeklemmt, mit dem Tubus 16 vernietet, mit dem Tubus 16 punktverschweißt oder mit einem hitzebeständigen Kleber mit dem Tubus 16 verklebt. In einem anderen Ausführungsbeispiel ist der Kragen durch lokale Umformung des Tubus 16 selbst hergestellt.

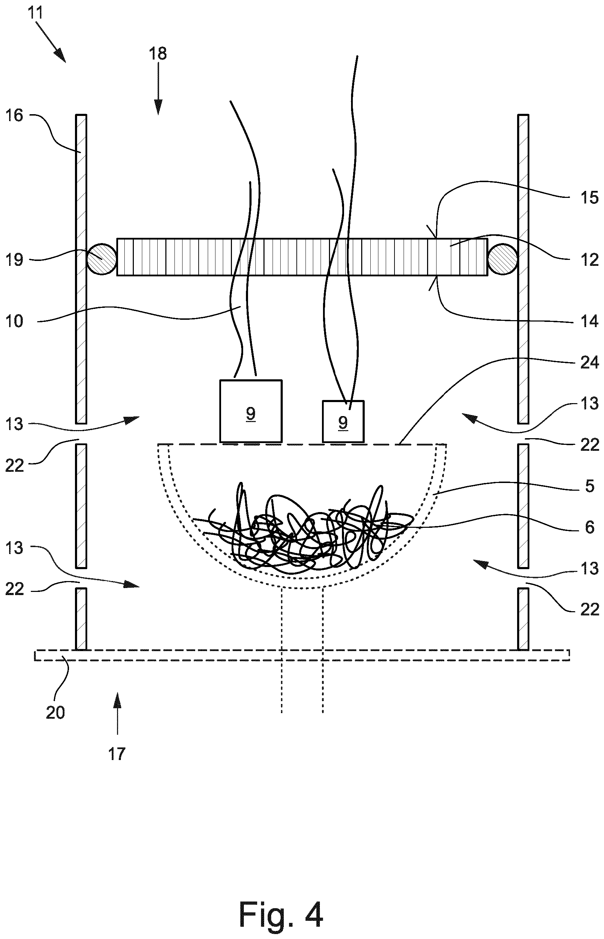

In Fig. 4 wird die Haltevorrichtung 19 durch eine thermisch hochfeste Dichtschnur gebildet, so wie sie beispielsweise im Kaminbau verwendet wird. Die Dichtschnur ist mit einem geeigneten Kleber an der Innenwandung des Tubus 16 festgeklebt.

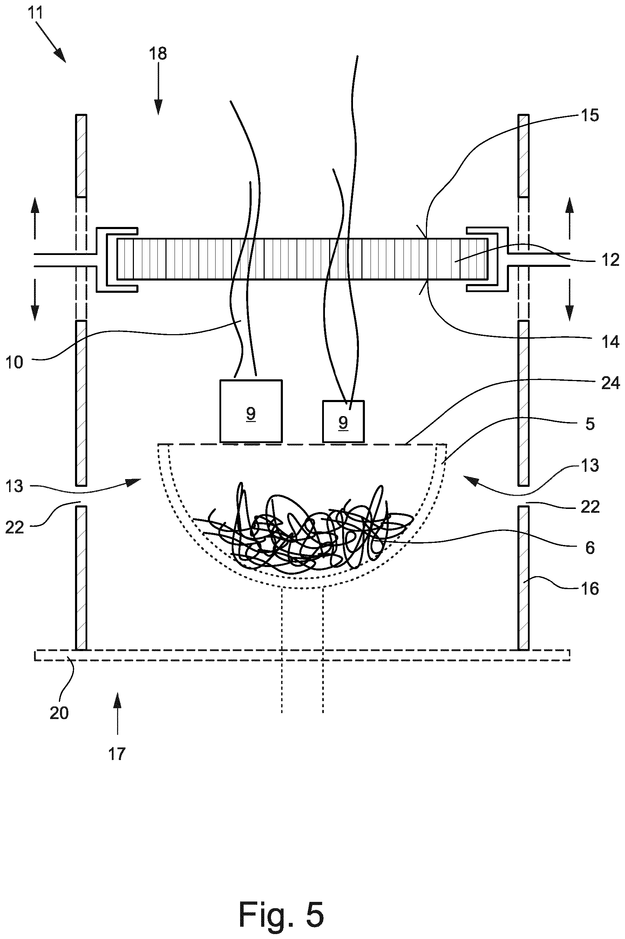

Das Ausführungsbeispiel gemäß Fig. 5 weist die Besonderheit auf, dass die Haltevorrichtung 19 für den Katalysator 12 entlang der Erstreckung des Tubus 16 von der ersten Tubusöffnung 17 zur zweiten Tubusöffnung 18 verstellbar angeordnet ist, wodurch die Katalysatoreinheit 11 an die Abmessungen ganz unterschiedlicher Wasserpfeifen anpassbar ist.

In den Fig. 4 und 5 ist dargestellt, dass unterhalb des Pfeifenkopfs 5 an der Rauchsäule 4 ein Fangteller 20 angeordnet ist, wobei der Fangteller 20 einen größeren Durchmesser als der größte Pfeifenkopfdurchmesser aufweist. Die erste Tubusöffnung 17 ist so ausgestaltet, dass der Tubus 16 mit der ersten Tubusöffnung 17 über den Pfeifenkopf 5 stülpbar ist und im Montagezustand der Tubus 16 mit dem Rand der ersten Tubusöffnung 17 auf dem Fangteller 20 zum liegen kommt. Die Katalysatoreinheit 11 steht so also auf dem Fangteller 20.

Bei den Ausführungsbeispielen gemäß den Fig. 1 und 3 ist eine andere Art der Platzierung der Katalysatoreinheit 11 im Bereich des Pfeifenkopfes 5 realisiert. Hier weist der Tubus 16 im Bereich der ersten Öffnung 17 einen weiteren Haltekragen 21 auf, mit dem sich die Katalysatoreinheit 11 auf dem Rand des Pfeifenkopfes 5 abstützt.

In allen dargestellten Ausführungsbeispielen weist der Tubus 16 in seiner Wandung Belüftungsöffnungen 22 auf, wobei durch die Belüftungsöffnungen 22 Umgebungsluft an den Aufnahmeort für den Brennstoff 9 im Innenraum der Katalysatoreinheit 11 gelangen kann, wobei die Belüftungsöffnungen 22 zwischen der ersten Tubusöffnung 17 und der Haltevorrichtung 19 für den Katalysator 12 vorgesehen sind.

### Bezugszeichen

- 1.: Wasserpfeife
- 2.: Waschflüssigkeit
- 3.: Waschgefäß
- 4.: Rauchsäule
- 5.: Pfeifenkopf
- 6.: Tabak
- 7.: Mundstückanschluss
- 8.: unbefülltes Volumen
- 9.: Brennstoff
- 10.: Brennstoffabgase
- 11.: Katalysatoreinheit
- 12.: Katalysator
- 13.: Umgebungsluft
- 14.: Einströmseite des Katalysators
- 15.: Ausströmseite des Katalysators
- 16.: Tubus
- 17.: erste Tubusöffnung
- 18.: zweite Tubusöffnung
- 19.: Haltevorrichtung
- 20.: Fangteller
- 21.: Haltekragen
- 22.: Belüftungsöffnungen
- 23.: perforierte Aluminiumfolie
- 24.: perforiertes Blech

## Patentansprüche

1. Wasserpfeife (1) mit einem mit einer Waschflüssigkeit (2) befüllbaren Waschgefäß (3), einer Rauchsäule (4) und einem Pfeifenkopf (5) zur Aufnahme von Tabak (6) oder Tabakersatzstoffen, wobei die Rauchsäule (4) und/oder das Waschgefäß (3) wenigstens einen Mundstückanschluss (7) aufweist und wobei im einsatzbereiten Zustand, also bei einer wenigstens teilweisen Befüllung des Waschgefäßes (3) mit einer Waschflüssigkeit (2), und bei Anlegen eines Unterdrucks an den Mundstückanschluss (7), ein Gasstrom vom Pfeifenkopf (5) über die Rauchsäule (4) in das Waschgefäß (3), in die Waschflüssigkeit (2), in ein unbefülltes Volumen (8) des Waschgefäßes (3) und durch den Mundstückanschluss (7) bewirkt wird, wobei in unmittelbarer Nähe des Pfeifenkopfes (5) ein Aufnahmeort für einen Brennstoff (9) realisiert ist und wobei der Brennstoff (9) im entzündeten Zustand den Tabak (6) oder den Tabakersatzstoff erhitzt und so genussfähigen Rauch erzeugt, **dadurch gekennzeichnet,**
**dass** oberhalb des Aufnahmeortes für den Brennstoff (9) eine Katalysatoreinheit (11) mit einem Katalysator (12) zur Katalyse der Oxidation von Kohlenmonoxid zu Kohlendioxid durch Sauerstoff so angeordnet ist, dass die im entzündeten Zustand des Brennstoffes (9) entstehenden Brennstoffabgase (10) zumindest teilweise durch die Katalysatoreinheit (11) geleitet werden und zumindest ein Teil des in den Brennstoffabgasen (10) vorhandenen Kohlenmonoxids zu Kohlendioxid oxidiert wird.

2. Wasserpfeife (1) nach Anspruch 1, **dadurch gekennzeichnet, dass** die Katalysatoreinheit (11) so angeordnet oder ausgestaltet ist, dass im Betriebszustand bei entzündetem Brennstoff (9) der zur Katalyse der Oxidation von Kohlenmonoxid zu Kohlendioxid erforderliche Sauerstoff durch Umgebungsluft (13) bereitgestellt ist.

3. Wasserpfeife (1) nach Anspruch 1 oder 2, **dadurch gekennzeichnet, dass** die Katalysatoreinheit (11) einen durchströmbaren Katalysator (12) aufweist, wobei im bestimmungsgemäßen Betriebszustand bei entzündetem Brennstoff (9) und von den Brennstoffabgasen (10) durchströmten Katalysator (12) der Katalysator (12) zwischen der Einströmseite (14) und der Ausströmseite (15) einen so geringen Strömungswiderstand hat, dass sich ein Druckabfall von höchsten 15 Pa, bevorzugt von höchstens 1 Pa, bevorzugt von höchstens 0,5 Pa, besonders bevorzugt von höchstens 0,05 Pa einstellt.

4. Wasserpfeife (1) nach einem der Ansprüche 1 bis 3, **dadurch gekennzeichnet, dass** die Katalysatoreinheit (11) und mit ihr der Katalysator (12) so ausgelegt sind, dass die vom entzündeten Brennstoff (9) freigesetzte Energie ausreicht, um die Brennstoffabgase (10) durch die Katalysatoreinheit (11) und den Katalysator (12) zu treiben.

5. Wasserpfeife (1) nach einem der Ansprüche 1 bis 4, **dadurch gekennzeichnet, dass** der Katalysator (12) zumindest teilweise aus einer beschichteten, offenporigen Schwammkeramik gebildet ist, wobei die Beschichtung zumindest teilweise aus Metalloxiden gebildet ist, insbesondere aus Übergangsmetallen und/oder Edelmetallen.

6. Wasserpfeife (1) nach einem der Ansprüche 1 bis 5, **dadurch gekennzeichnet, dass** die Katalysatoreinheit (11) so zu dem Aufnahmeort für den Brennstoff (9) angeordnet ist, dass im Betriebszustand bei entzündetem Brennstoff (9) die durch den entzündeten Brennstoff (9) zum Katalysator (12) der Katalysatoreinheit (11) transportierte Energie ausreicht, um die für die zu bewirkende Katalyse von Kohlenmonoxid zu Kohlendioxid erforderliche Katalysatortemperatur zu erzielen.

7. Wasserpfeife (1) nach Anspruch 6, **dadurch gekennzeichnet, dass** der Katalysator (12) eine erforderliche Katalysatortemperatur von höchstens 800°C, insbesondere von höchstens 400 °C, insbesondere von höchstens 300 °C, insbesondere von höchstens 200 °C, bevorzugt von höchstens 100 °C aufweist.

8. Wasserpfeife (1) nach einem der Ansprüche 1 bis 7, **dadurch gekennzeichnet, dass** die Katalysatoreinheit (11) einen Tubus (16) und den Katalysator (12) aufweist, wobei sich der Tubus (16) zwischen einer ersten Tubusöffnung (17) und einer zweiten Tubusöffnung (18) erstreckt, wobei im Montagezustand der Katalysatoreinheit (11) die erste Tubusöffnung (17) unterhalb der zweiten Tubusöffnung (18) angeordnet ist, wobei der Katalysator (12) in dem Querschnitt des Tubus (16) mit einer Haltevorrichtung (19) zwischen der ersten Tubusöffnung (17) und der zweiten Tubusöffnung (18) gehalten wird, insbesondere wobei der Katalysator (12) mindestens 99 %, bevorzugt mindestens 95 %, insbesondere mindestens 85 %, bevorzugt mindestens 75 %, ganz bevorzugt mindestens 40 % des Querschnitts des Tubus (16) einnimmt.

9. Wasserpfeife (1) nach Anspruch 8, **dadurch gekennzeichnet, dass** die Haltevorrichtung (19) der Katalysatoreinheit (11) in dem Tubus (16) als zumindest teilweise umlaufender Kragen ausgebildet ist, insbesondere wobei der Kragen Unterbrechungen aufweist, auf dem sich der Katalysator (12) im Montagezustand aufgrund seiner Gewichtskraft abstützt.

10. Wasserpfeife (1) nach Anspruch 8 oder 9, **dadurch gekennzeichnet, dass** die Haltevorrichtung (19) für den Katalysator (12) entlang der Erstreckung des Tubus (16) von der ersten Tubusöffnung (17) zur zweiten Tubusöffnung (18) verstellbar angeordnet ist.

11. Wasserpfeife (1) nach einem der Ansprüche 8 bis 10, **dadurch gekennzeichnet, dass** zwischen der Wandung des Tubus (16) und dem Katalysator (12) Strömungsöffnungen, insbesondere mit freiem Querschnitt, ausgebildet sind.

12. Wasserpfeife (1) nach einem der Ansprüche 8 bis 11, **dadurch gekennzeichnet, dass** unterhalb des Pfeifenkopfs (5) an der Rauchsäule (4) ein Fangteller (20) angeordnet ist, wobei der Fangteller (20) einen größeren Durchmesser als der größte Pfeifenkopfdurchmesser aufweist, und dass die erste Tubusöffnung (17) so ausgestaltet ist, dass der Tubus (16) mit der ersten Tubusöffnung (17) über den Pfeifenkopf (5) stülpbar ist und im Montagezustand mit dem Rand der ersten Tubusöffnung (17) auf dem Fangteller (20) zum liegen kommt.

13. Wasserpfeife (1) nach Anspruch 12, **dadurch gekennzeichnet, dass** der Tubus (16) in seiner Wandung wenigstens eine Belüftungsöffnung (22) aufweist, wobei durch die Belüftungsöffnung (22) Umgebungsluft (13) an den Aufnahmeort für den Brennstoff (9) im Innenraum der Katalysatoreinheit (11) gelangen kann, insbesondere wobei die Belüftungsöffnung (22) zwischen der ersten Tubusöffnung (17) und der Haltevorrichtung (19) für den Katalysator (12) vorgesehen ist.

14. Katalysatoreinheit (11) für eine Wasserpfeife (1) mit einem Katalysator (12) zur Katalyse der Oxidation von Kohlenmonoxid zu Kohlendioxid durch Sauerstoff, wobei die Wasserpfeife (1) ein mit einer Waschflüssigkeit (2) befüllbares Waschgefäß (3), eine Rauchsäule (4) und einen Pfeifenkopf (5) zur Aufnahme von Tabak (6) oder Tabakersatzstoffen aufweist, wobei die Rauchsäule (4) und/oder das Waschgefäß (3) wenigstens einen Mundstückanschluss (7) aufweist und wobei im einsatzbereiten Zustand, also bei einer wenigstens teilweisen Befüllung des Waschgefäßes (3) mit einer Waschflüssigkeit (2), und bei Anlegen eines Unterdrucks an den Mundstückanschluss (7), ein Gasstrom vom Pfeifenkopf (5) über die Rauchsäule (4) in das Waschgefäß (3), in die Waschflüssigkeit (2), in ein unbefülltes Volumen (8) des Waschgefäßes (3) und durch den Mundstückanschluss (7) bewirkt wird, wobei in unmittelbarer Nähe des Pfeifenkopfes (5) ein Aufnahmeort für einen Brennstoff (9) realisiert ist und wobei der Brennstoff (9) im entzündeten Zustand den Tabak (6) oder den Tabakersatzstoff erhitzt und so genussfähigen Rauch erzeugt, wobei die Katalysatoreinheit (11) so ausgestaltet ist, dass sie oberhalb des Aufnahmeortes für den Brennstoff (9) so an der Wasserpfeife (1) anordenbar ist, dass die im entzündeten Zustand des Brennstoffes (9) entstehenden Brennstoffabgase (10) zumindest teilweise durch die Katalysatoreinheit (11) geleitet werden und zumindest ein Teil des in den Brennstoffabgasen (10) vorhandenen Kohlenmonoxids zu Kohlendioxid oxidiert wird.

15. Katalysatoreinheit (11) nach Anspruch 14, **gekennzeichnet durch** die Merkmale wenigstens eines Kennzeichnungsteils der Ansprüche 3 bis 5 und 7 bis 11.

## Claims

1. Water pipe (1) with a washing vessel (3) which can be filled with a washing liquid (2), a smoke column (4) and a pipe bowl (5) for receiving tobacco (6) or tobacco substitutes, wherein the smoke column (4) and/or the washing vessel (3) has at least one mouthpiece connection (7) and wherein, in the ready-to-use state, i.e. when the washing vessel (3) is at least partially filled with a washing liquid (2) and when a negative pressure is applied to the mouthpiece connection (7), a gas flow is effected from the pipe bowl (5) via the smoke column (4) into the washing vessel (3), into the washing liquid (2), into an unfilled volume (8) of the washing vessel (3) and through the mouthpiece connection (7), wherein a receptacle for a fuel (9) is implemented in the immediate vicinity of the pipe bowl (5) and wherein the fuel (9), in the ignited state, heats the tobacco (6) or the tobacco substitute and thus generates smoke which is suitable for consumption,
**characterized in**
**that** a catalyst unit (11) having a catalyst (12) for catalyzing the oxidation of carbon monoxide to carbon dioxide with oxygen is arranged above the receptacle for the fuel (9) in such a way that the fuel exhaust gases (10) produced in the ignited state of the fuel (9) are passed at least partially through the catalyst unit (11) and at least some of the carbon monoxide present in the fuel exhaust gases (10) is oxidized to carbon dioxide.

2. Water pipe (1) according to claim 1, **characterized in that** the catalyst unit (11) is arranged or designed in such a way that, in the operating state, when the fuel (9) is ignited, the oxygen required to catalyze the oxidation of carbon monoxide to carbon dioxide is provided by ambient air (13).

3. Water pipe (1) according to claim 1 or 2, **characterized in that** the catalyst unit (11) has a catalyst (12) through which flow is possible, wherein, in the intended operating state with ignited fuel (9) and catalyst (12) through which the fuel exhaust gases (10) flow, the catalyst (12) has such a low flow resistance between the inflow side (14) and the outflow side (15), that a pressure drop of at most 15 Pa, preferably of at most 1 Pa, preferably of at most 0.5 Pa, particularly preferably of at most 0.05 Pa, occurs.

4. Water pipe (1) according to any one of claims 1 to 3, **characterized in that** the catalyst unit (11) and, with it, the catalyst (12) are designed such that the energy released by the ignited fuel (9) is sufficient to drive the fuel exhaust gases (10) through the catalyst unit (11) and the catalyst (12).

5. Water pipe (1) according to any one of claims 1 to 4, **characterized in that** the catalyst (12) is formed at least in part from a coated, open-pored ceramic foam, wherein the coating is formed at least in part from metal oxides, in particular transition metals and/or noble metals.

6. Water pipe (1) according to any one of claims 1 to 5, **characterized in that** the catalyst unit (11) is arranged relative to the receptacle for the fuel (9) in such a way that, in the operating state when the fuel (9) is ignited, the energy transported by the ignited fuel (9) to the catalyst (12) of the catalyst unit (11) is sufficient to achieve the catalyst temperature required for the catalysis of carbon monoxide to carbon dioxide to be effected.

7. Water pipe (1) according to claim 6, **characterized in that** the catalyst (12) has a required catalyst temperature of at most 800°C, in particular of at most 400°C, in particular of at most 300°C, in particular of at most 200°C, preferably of at most 100°C.

8. Water pipe (1) according to any one of claims 1 to 7, **characterized in that** the catalyst unit (11) comprises a tube (16) and the catalyst (12), wherein the tube (16) extends between a first tube opening (17) and a second tube opening (18), wherein, in the assembled state of the catalyst unit (11), the first tube opening (17) is arranged below the second tube opening (18), wherein the catalyst (12) is held in the cross-section of the tube (16) with a holding device (19) between the first tube opening (17) and the second tube opening (18), in particular wherein the catalyst (12) occupies at least 99%, preferably at least 95%, in particular at least 85%, preferably at least 75%, most preferably at least 40% of the cross-section of the tube (16).

9. Water pipe (1) according to claim 8, **characterized in that** the holding device (19) of the catalyst unit (11) in the tube (16) is designed as an at least partially circumferential collar, in particular wherein the collar has interruptions on which the catalyst (12) is supported in the assembled state on the basis of its weight force.

10. Water pipe (1) according to claim 8 or 9, **characterized in that** the holding device (19) for the catalyst (12) is arranged adjustably along the extension of the tube (16) from the first tube opening (17) to the second tube opening (18).

11. Water pipe (1) according to any one of claims 8 to 10, **characterized in that** flow openings, in particular of free cross-section, are formed between the wall of the tube (16) and the catalyst (12).

12. Water pipe (1) according to any one of the claims 8 to 11, **characterized in that** a catch plate (20) is arranged below the pipe bowl (5) on the smoke column (4), wherein the catch plate (20) has a larger diameter than the largest pipe bowl diameter, and that the first tube opening (17) is designed in such a way that the tube (16) can be placed with the first tube opening (17) over the pipe bowl (5) and, in the assembled state, comes to rest with the edge of the first tube opening (17) on the catch plate (20).

13. Water pipe (1) according to claim 12, **characterized in that** the tube (16) has at least one ventilation opening (22) in its wall, wherein ambient air (13) is able to reach the receptacle for the fuel (9) in the interior of the catalyst unit (11) through the ventilation opening (22), in particular wherein the ventilation opening (22) is provided between the first tube opening (17) and the holding device (19) for the catalyst (12).

14. Catalyst unit (11) for a water pipe (1) with a catalyst (12) for catalyzing the oxidation of carbon monoxide to carbon dioxide with oxygen, wherein the water pipe (1) has a washing vessel (3) that can be filled with a washing liquid (2), a smoke column (4) and a pipe bowl (5) for receiving tobacco (6) or tobacco substitutes, wherein the smoke column (4) and/or the washing vessel (3) has at least one mouthpiece connection (7) and wherein, in the ready-to-use state, i.e. when the washing vessel (3) is at least partially filled with a washing liquid (2), and when a negative pressure is applied to the mouthpiece connection (7), a gas flow from the pipe bowl (5) via the smoke column (4) into the washing vessel (3), into the washing liquid (2), into an unfilled volume (8) of the washing liquid (2), and into an unfilled volume (8) of the washing vessel (3) and through the mouthpiece connection (7), wherein a receptacle for fuel (9) is implemented in the immediate vicinity of the pipe bowl (5) and wherein the fuel (9), in the ignited state, heats the tobacco (6) or the tobacco substitute and thus generates smoke that can be consumed, wherein the catalyst unit (11) is configured in such a way that it can be arranged on the water pipe (1) above the receptacle for the fuel (9) in such a way that the fuel exhaust gases (10) produced in the ignited state of the fuel (9) are at least partially passed through the catalyst unit (11) and at least some of the carbon monoxide present in the fuel exhaust gases (10) is oxidized to carbon dioxide.

15. Catalyst unit (11) according to claim 14, **characterized by** the features of at least one characterizing portion of claims 3 to 5 and 7 to 11..

## Revendications

1. Pipe à eau (1) comprenant un récipient de lavage (3) pouvant être rempli d'un liquide de lavage (2), une colonne de fumée (4) et une tête de pipe (5) destinée à recevoir du tabac (6) ou des succédanés de tabac, la colonne de fumée (4) et/ou le récipient de lavage (3) comportant au moins un raccord d'embout (7) et, à l'état prêt à l'emploi, c'est-à-dire lorsque le récipient de lavage (3) est au moins partiellement rempli d'un liquide de lavage (2), et lorsqu'une pression négative est appliquée au raccord d'embout (7), un flux de gaz étant généré de la tête de pipe (5) par le biais de la colonne de fumée (4) jusque dans le récipient de lavage (3), dans le liquide de lavage (2), dans un volume non rempli (8) du récipient de lavage (3) et à travers le raccord d'embout (7), un site de réception d'un combustible (9) étant prévu à proximité immédiate de la tête de pipe (5), et le combustible (9) chauffant à l'état enflammé le tabac (6) ou le succédané de tabac et générant ainsi une agréable fumée,
**caractérisée en ce que**
une unité catalytique (11) comprenant un catalyseur (12) destiné à catalyser l'oxydation du monoxyde de carbone en dioxyde de carbone par le biais de l'oxygène est disposée au-dessus du site de réception du combustible (9) de telle sorte que les gaz de fumée de combustible (10) produits lorsque le combustible (9) est enflammé soient guidés au moins partiellement à travers l'unité catalytique (11) et qu'au moins une partie du monoxyde de carbone présent dans les gaz de fumée de combustible (10) soit oxydée en dioxyde de carbone.

2. Pipe à eau (1) selon la revendication 1, **caractérisée en ce que** l'unité catalytique (11) est disposée ou conçue de sorte que, à l'état de fonctionnement lorsque le combustible (9) est enflammé, l'oxygène nécessaire pour catalyser l'oxydation du monoxyde de carbone en dioxyde de carbone est fourni par l'air ambiant (13).

3. Pipe à eau (1) selon la revendication 1 ou 2, **caractérisée en ce que** l'unité catalytique (11) comporte un catalyseur (12) qui peut être traversé par un écoulement, dans l'état de fonctionnement prévu lorsqu'un combustible (9) est enflammé et qu'un catalyseur (12) est traversé par un écoulement de gaz de fumée de combustible (10), le catalyseur (12) présentant entre le côté entrée (14) et le côté sortie (15) une faible résistance à l'écoulement de sorte qu'il se produit une chute de pression de 15 Pa maximum, de préférence de 1 Pa maximum, de préférence de 0,5 Pa maximum, de manière particulièrement préférée de 0,05 Pa.

4. Pipe à eau (1) selon l'une des revendications 1 à 3, **caractérisée en ce que** l'unité catalytique (11) et conjointement le catalyseur (12) sont conçus de sorte que l'énergie dégagée par le combustible enflammé (9) soit suffisante pour entraîner les gaz de fumée de combustible (10) à travers l'unité catalytique (11) et le catalyseur (12).

5. Pipe à eau (1) selon l'une des revendications 1 à 4, **caractérisée en ce que** le catalyseur (12) est au moins partiellement formé d'une éponge céramique à pores ouverts pourvue d'un revêtement, le revêtement étant au moins partiellement formé d'oxydes métalliques, notamment de métaux de transition et/ou de métaux nobles.

6. Pipe à eau (1) selon l'une des revendications 1 à 5, **caractérisée en ce que** l'unité catalytique (11) est disposée au site de réception du combustible (9) de sorte que, à l'état de fonctionnement lorsque le combustible (9) est enflammé, l'énergie transportée par le combustible enflammé (9) vers le catalyseur (12) de l'unité catalytique (11) est suffisante pour atteindre la température de catalyseur requise pour réaliser la catalyse du monoxyde de carbone en dioxyde de carbone.

7. Pipe à eau (1) selon la revendication 6, **caractérisée en ce que** le catalyseur (12) a une température de catalyseur requise de 800 °C maximum, notamment de 400 °C maximum, en particulier de 300 °C maximum, en particulier de 200 °C maximum, de préférence de 100 °C maximum.

8. Pipe à eau (1) selon l'une des revendications 1 à 7, **caractérisée en ce que** l'unité catalytique (11) comporte un tube (16) et le catalyseur (12), le tube (16) s'étendant entre une première ouverture de tube (17) et une deuxième ouverture de tube (18), la première ouverture de tube (17) étant disposée au-dessous de la deuxième ouverture de tube (18) lorsque l'unité catalytique (11) est montée, le catalyseur (12) étant maintenu entre la première ouverture de tube (17) et la deuxième ouverture de tube (18) au moyen d'un dispositif de retenue (19) dans la section transversale du tube (16), en particulier le catalyseur (12) occupant au moins 99 %, de préférence au moins 95 %, en particulier au moins 85 %, de préférence au moins 75 %, de manière très préférée au moins 40 % de la section transversale du tube (16).

9. Pipe à eau (1) selon la revendication 8, **caractérisée en ce que** le dispositif de retenue (19) de l'unité catalytique (11) dans le tube (16) est conçu sous la forme d'une collerette au moins partiellement circonférentielle, notamment la collerette, sur laquelle le catalyseur (12) s'appuie à l'état assemblé en raison de son poids, comportant des interruptions.

10. Pipe à eau (1) selon la revendication 8 ou 9, **caractérisée en ce que** le dispositif de retenue (19) du catalyseur (12) est disposé de manière réglable de la première ouverture de tube (17) à la deuxième ouverture de tube (18) le long l'extension du tube (16).

11. Pipe à eau (1) selon l'une des revendications 8 à 10, **caractérisée en ce que** des ouvertures d'écoulement, notamment de section transversale libre, sont ménagées entre la paroi du tube (16) et le catalyseur (12).

12. Pipe à eau (1) selon l'une des revendications 8 à 11, **caractérisée en ce qu'**une plaque de fixation (20) est disposée sur la colonne de fumée (4) au-dessous de la tête de pipe (5), la plaque de fixation (20) ayant un diamètre supérieur au plus grand diamètre de la tête de pipe, et **en ce que** la première ouverture de tube (17) est conçue de telle sorte que le tube (16) puisse être embouti avec la première ouverture de tube (17) sur la tête de tube (5) et, à l'état assemblé, vient se placer avec le bord de la première ouverture de tube (17) sur la plaque de fixation (20).

13. Pipe à eau (1) selon la revendication 12, **caractérisée en ce que** le tube (16) comporte au moins une ouverture de ventilation (22) dans sa paroi, l'air ambiant (13) pouvant atteindre, à travers l'ouverture de ventilation (22), le site de réception du combustible (9) à l'intérieur de l'unité catalytique (11), en particulier l'ouverture de ventilation (22) étant prévue pour le catalyseur (12) entre la première ouverture de tube (17) et le dispositif de retenue (19) .

14. Unité catalytique (11) destinée à une pipe à eau (1) et comprenant un catalyseur (12) destiné à catalyser l'oxydation du monoxyde de carbone en dioxyde de carbone par le biais de l'oxygène, la pipe à eau (1) comportant un récipient de lavage (3) qui peut être rempli d'un liquide de lavage (2), une colonne de fumée (4) et une tête de pipe (5) destinée à recevoir du tabac (6) ou des succédanés de tabac, la colonne de fumée (4) et/ou le récipient de lavage (3) comportant au moins un raccord d'embout (7) et, à l'état prêt à l'emploi, c'est-à-dire lorsque le récipient de lavage (3) est au moins partiellement rempli d'un liquide de lavage (2), et lorsqu'une pression négative est appliquée au raccord d'embout (7), un flux de gaz étant généré de la tête de pipe (5) par le biais de la colonne de fumée (4) jusque dans le récipient de lavage (3), dans le liquide de lavage (2), dans un volume non rempli (8) du récipient de lavage (3) et à travers le raccord d'embout (7), un site de réception d'un combustible (9) étant prévu à proximité immédiate de la tête de pipe (5), et le combustible (9) chauffant à l'état enflammé le tabac (6) ou le succédané de tabac et générant ainsi une agréable fumée, l'unité catalytique (11) étant conçue pour être disposée au-dessus du site de réception du combustible (9) de telle sorte que les gaz de fumée de combustible (10) produits lorsque le combustible (9) est enflammé soient guidés au moins partiellement à travers l'unité catalytique (11) et qu'au moins une partie du monoxyde de carbone présent dans les gaz de fumée de combustible (10) soit oxydée en dioxyde de carbone.

15. Unité catalytique (11) selon la revendication 14, **caractérisée par** les caractéristiques d'au moins une partie caractérisante des revendications 3 à 5 et 7 à 11.
